## Europäisches Patentamt
### European Patent Office
### Office européen des brevets

(19)

(11) Veröffentlichungsnummer: **0 007 538**
A1

# EUROPÄISCHE PATENTANMELDUNG

(21) Anmeldenummer: 79102444.1

(22) Anmeldetag: 16.07.79

(51) Int. Cl.³: **F 24 J 3/00**
**F 24 D 3/10**

(30) Priorität: 20.07.78 AT 5255/78

(43) Veröffentlichungstag der Anmeldung:
06.02.80 Patentblatt 80/3

(84) Benannte Vertragsstaaten:
BE CH DE FR GB IT NL SE

(71) Anmelder: Holztrattner, Heinrich
Puch 453
A-5412 Puch(AT)

(72) Erfinder: Holztrattner, Heinrich
Puch 453
A-5412 Puch(AT)

(54) Geschlossener Behälter zur Speicherung und/oder Erzeugung von Wärme oder Kälte.

(57) Durch den Einbau von Ausdehnungskörpern (6) in geschlossene Behälter (1) kann die Volumenänderung, beim Erwärmen bzw. Abkühlen des Wärme- oder Kältespeichermediums (5), im Behälter (1) aufgenommen werden. Solche Ausdehnungskörper (6) verhindern beim Einbau in Sonnenkollektoren (2) das Bersten beim Einfrieren im Winter. Ein weiterer Vorteil ist der, daß das Wärme- oder Kältespeichermedium (5) nicht mit der Luft in Verbindung steht.

EP 0 007 538 A1

Croydon Printing Company Ltd.

Holztrattner Heinrich
A-5412 Puch 453

Die Erfindung betrifft einen geschlossenen Behälter zur
Speicherung und/oder Erzeugung von Wärme oder Kälte.

Behälter zur Speicherung von Wärme oder Kälte sind in den
verschiedensten Ausführungen bereits bekannt. Gemeinsam ist
jedoch allen, daß die sich bildenden Drücke dadurch abgebaut
werden, daß sie über Standrohre oder Be- und Entlüftungsventile mit der Atmosphäre in Verbindung stehen oder an ein,
außerhalb des Speichers liegendes Ausdehnungsgefäß angeschlossen sind.

Die Erfindung hat sich nun zur Aufgabe gestellt, im Behälter
Ausdehnungskörper anzuordnen, die die Volumsänderungen des
Wärme- oder Kältetransportmittels im Behälter aufnehmen.

Im Behälter, der das Wärme- oder Kältetransportmittel enthält
sind ein oder mehrere Ausdehnungskörper angeordnet. Diese Ausdehnungskörper bewirken nun, daß der Druck beim Erwärmen nicht
wesentlich zunimmt bzw. beim Abkühlen kein Unterdruck entsteht. Da das Wärme- oder Kältetransportmittel von der
Atmosphäre dicht abgeschlossen ist, besteht nicht mehr die Gefahr einer vorzeitigen Zersetzung oder Alterung bzw. Erhöhung
der Agressivität durch Sauerstoffzufuhr. Dadurch, daß die
Ausdehnungskörper im Behälter eingebaut sind, ist auch kein zusätzlicher Wärme- bzw. Kälteverlust möglich und der Raumbedarf ist geringer, da keine Verbindungsleitungen notwendig sind.

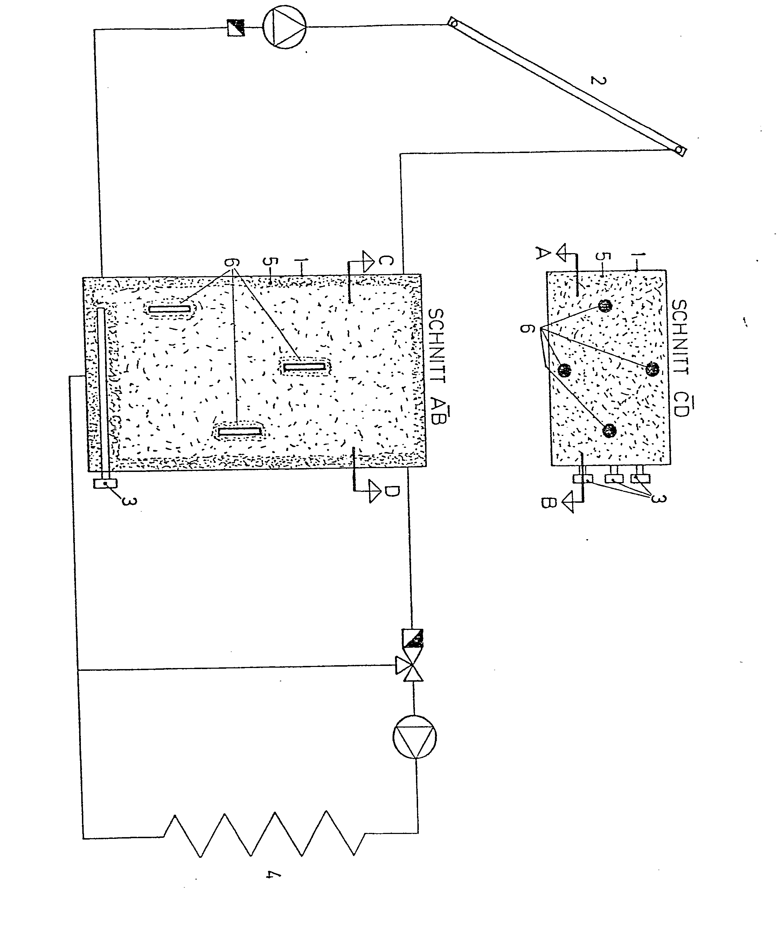

Nachstehend wird nun die Erfindung an Hand der Zeichnung, die schematisch eine Solaranlage mit Fußbodenheizung zeigt, beschrieben.

Das Wärme- oder Kältetransportmittel 5 im Behälter 1 wird durch die Solarzelle 2 oder das Elektroheizregister 3 aufgeheizt. Die Wärme wird beispielsweise für eine Fußbodenheizung 4 verwendet. Die im Behälter 1 liegenden Ausdehnungskörper 6 ermöglichen bei der Erwärmung die Ausdehnung des Wärme- oder Kältetransportmittels (z.B.Wasser). Im angeführten Beispiel erfolgt die Erwärmung des Wärme- oder Kältetransportmittels 5 direkt durch die Solarzelle 2 oder durch das Elektroheizregister 3. Durch den Einbau von Ausdehnungskörpern in das Wärme- oder Kältetransportmittel innerhalb der Solarzelle 2 kann diese beim Einfrieren nicht beschädigt werden.

Puch, am 11. Juli 1979

Holstrettner Heinrich
A-5412 Puch 453

Patentanspruch

Geschlossener Behälter zur Speicherung und/oder Erzeugung
von Wärme- oder Kälte dadurch gekennzeichnet,
daß die Volumsänderungen des Wärme- oder Kältespeichermediums (5)
im Behälter (1) durch in diesem Behälter (1) angeordnete Ausdehnungskörper (6) aufgenommen werden.

Puch, 1979-o7-11

SCHNITT C̄D̄

SCHNITT ĀB̄

Europäisches Patentamt

**EUROPÄISCHER RECHERCHENBERICHT**

Nummer der Anmeldung

EP 79 102 444.1

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| P,X | DE – A1 – 2 725 658 (LAING)<br>* Fig. 1, Position 8 *<br><br>-- | 1 | F 24 J 3/00<br>F 24 D 3/10 |
| | FR – A – 2 010 241 (THERMO-BAUELEMENT)<br>* Fig. 5, Position 53 *<br><br>-- | 1 | |
| | DE – A1 – 2 626 974 (RHEINISCHES ZINKWALZWERK)<br>* Fig. 2, Positionen 20 und 21 *<br><br>-- | 1 | RECHERCHIERTE SACHGEBIETE (Int. Cl.³) |
| | DE – A1 – 2 434 315 (LUWA)<br>* Fig. 1, Positionen 30 und 32 *<br><br>-- | 1 | F 24 D 3/00<br>F 24 D 11/00<br>F 24 J 3/00 |
| P | DE – A1-2 806 610 (MAYA DYNAMICS)<br>* Fig. 1, Positionen 3, 4 und 22 *<br><br>-- | 1 | |
| A | DE – A1 – 2 614 545 (EICHER)<br>* Fig. , Position 12 *<br><br>-- | 1 | |
| A | DE – A1 – 2 517 921 (PHILIPS)<br>* Fig. 1, Position 6 *<br><br>---- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: In der Anmeldung angeführtes Dokument
L: aus andern Gründen angeführtes Dokument
&: Mitglied der gleichen Patentfamilie. Übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 18-10-1979 | PIEPER |

EPA form 1503.1 06.78